# EUROPEAN PATENT APPLICATION

(11) **EP 3 128 364 A1**
(43) Date of publication of application: **08.02.2017**
(21) Application number: 14890579.7
(22) Date of filing: 28.04.2014
(51) Int. Cl.: G02F 1/13357, F21V 8/00

(54) **LIGHT GUIDE PLATE, LIQUID CRYSTAL DISPLAY MODULE AND TERMINAL DEVICE**

(71) Applicant: Huawei Device Co., Ltd., Shenzhen, Guangdong 518129 (CN)
(72) Inventor: WEI, Konggang, Shenzhen Guangdong 518129 (CN); XIE, Sheng, Shenzhen Guangdong 518129 (CN); LIU, Fangcheng, Shenzhen Guangdong 518129 (CN); MIAO, Deyou, Shenzhen Guangdong 518129 (CN); JIANG, Peng, Shenzhen Guangdong 518129 (CN); DENG, Changmeng, Shenzhen Guangdong 518129 (CN)
(74) Representative: Maiwald Patentanwalts GmbH
(86) International application number: PCT/CN2014/076390
(87) International publication number: WO 2015/165010

(57) **Abstract**

A light guide plate (1), a liquid crystal display module, and a terminal device are disclosed, where the light guide plate (1) includes: a light guide plate substrate (11), including a light inlet surface (112) and a light outlet surface (113), where a first groove (111) is disposed on the light guide plate substrate (11), and is configured to accommodate a light emitting portion (21) of a first light source (2), and a bottom surface of the first groove (111) forms the light inlet surface (112); and a light reflection layer (12), disposed on a part of an outer surface of the light guide plate substrate except the light inlet surface (112) and the light outlet surface (113), where light emitted from the first light source (2) enters the light guide plate substrate (11) through the light inlet surface (112), and is refracted by the light reflection layer (12), so that the light emitted from the first light source (2) comes out through the light outlet surface (113).

## Description

### TECHNICAL FIELD

The present invention relates to the liquid crystal display field, and in particular, to a light guide plate, a liquid crystal display module, and a terminal device.

### BACKGROUND

Because a liquid crystal module of a liquid crystal display does not emit light itself, to enable the liquid crystal display to normally display an image, a backlight module is used to provide enough luminance and a uniformly distributed light source to display the image. The backlight module is one of key components of a liquid crystal display module (liquid crystal display module, LCM). At present, a liquid crystal display (liquid crystal display module, LCD) panel made by using the LCM has been widely used in electronics products, such as a display, a notebook computer, a cell phone, a digital camera, and a projector.

A light guide plate is one important part of the LCM, and performance of the light guide plate severely restrains backlight efficiency of the LCM. For a small-sized LCM, an existing backlight light source is generally an edge-illumination type backlight light source. However, because an LED light source is disposed outside the light guide plate, a gap exists between the LED light source and the light guide plate; as a result, light of the LED is caused to leak from surrounding edges and a back side of the light guide plate, leading to low backlight efficiency.

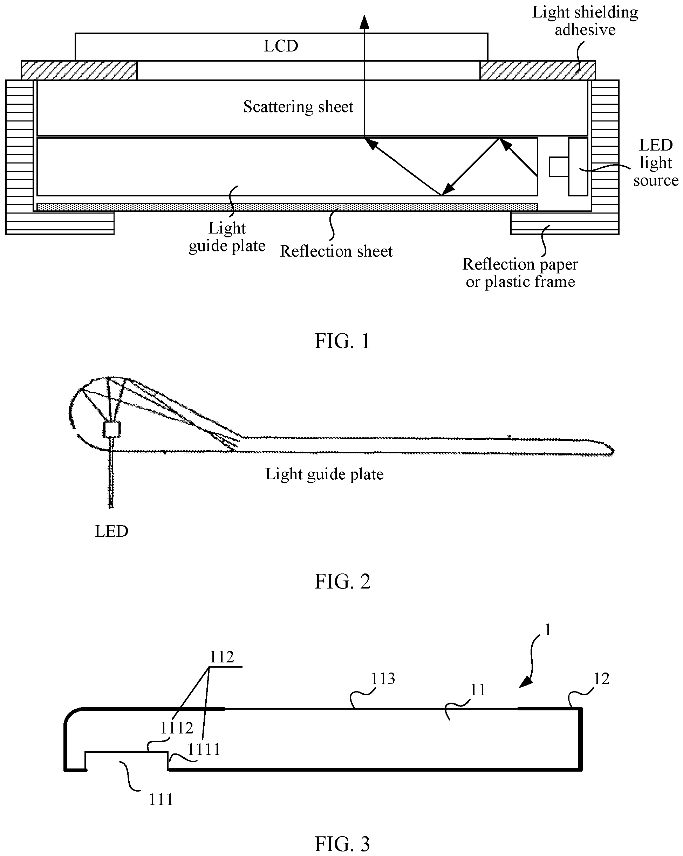

An existing solution is to add a reflection paper or use a white plastic frame at the periphery of the light guide plate to reflect, add a reflection sheet to the back side, and apply light shielding adhesive to a gap between the top side and the LCD. A structure may be shown in FIG. 1, where light emitted from the LED light source is converted into planar light after transported by the light guide plate, and after passing through a scattering sheet, the light comes out vertically to the LCD. However, using a reflection paper or a white plastic frame to reflect light undoubtedly brings about a space occupation problem, and increases a size of the LCM and costs; in addition, there is an air gap between the reflection paper or the white plastic frame and the light guide plate, which causes a light leakage phenomenon and decreases the quality of the LCM.

In addition, an LED-embedded light guide plate is further put forward in the industry to improve the amount of incident light, as shown in FIG. 2. However, with the development of a thinning tendency of products, such as a cell phone and a PAD, a requirement on a thickness of the LCM is increasingly high. To reduce the thickness of the LCM, the light guide plate is required to become thinner. A miniaturization speed of the LED is slower than a thinning speed of the LCM, which leads to a case in which the thickness of the light guide plate is close to the thickness of the LED, and even the thickness of the light guide plate is less than the thickness of the LED. Therefore, a structure of the LED-embedded light guide plate restrains the development of the LCM thinning.

### SUMMARY

Embodiments of the present invention provide a light guide plate, a liquid crystal display module, and a terminal device, which can improve the amount of incident light of a light guide plate and increase backlight efficiency of an LCM without increasing a size of the LCM.

According to a first aspect, an embodiment of the present invention provides a light guide plate, including:
a light guide plate substrate, including a light inlet surface and a light outlet surface, where a first groove is disposed on the light guide plate substrate, the first groove is configured to accommodate a light emitting portion of a first light source, and a bottom surface of the first groove forms the light inlet surface; and
a light reflection layer, disposed on a part of an outer surface of the light guide plate substrate except the light inlet surface and the light outlet surface, where
light emitted from the first light source enters the light guide plate substrate through the light inlet surface, and is refracted by the light reflection layer, so that the light emitted from the first light source comes out through the light outlet surface.

In a first possible implementation manner, the light inlet surface further includes a groove peripheral surface of the first groove.

With reference to the first aspect or the first possible implementation manner of the first aspect, in a second possible implementation manner, the first groove is further configured to form airtight space with the first light source, so as to prevent the light emitted from the first light source from coming out from another place except the light inlet surface.

In a third possible implementation manner, the bottom surface is planar or arc-shaped.

With reference to the first possible implementation manner of the first aspect, in a fourth possible implementation manner, the first groove is disposed on an end of an upper surface or an end of a lower surface of the light guide plate substrate; and an angle between the groove peripheral surface of the first groove and the upper surface or the lower surface is a right angle.

With reference to the first possible implementation manner of the first aspect, in a fifth possible implementation manner, the first groove is disposed on a joint of an upper surface and an end surface of the light guide plate substrate, or the first groove is disposed on a joint of a lower surface and an end surface of the light guide plate substrate; and an angle between the groove peripheral surface of the first groove and the upper surface or the lower surface of the light guide plate substrate is an acute angle.

With reference to the first aspect or the fourth or fifth possible implementation manner of the first aspect, in a sixth possible implementation manner, the joint of the upper surface or the lower surface of the light guide plate substrate and the end surface of the light guide plate substrate is a curved surface.

With reference to the first aspect or the first, second, third, fourth, fifth, or sixth possible implementation manner of the first aspect, in a seventh possible implementation manner, optical clear adhesive is filled between the light emitting portion of the first light source and the first groove.

With reference to the first aspect or the first, second, third, fourth, fifth, sixth, or seventh possible implementation manner of the first aspect, in an eighth possible implementation manner, the light reflection layer is any one of silver, aluminum, and non-metallic dielectric film, where
the non-metallic dielectric film is made of silicon dioxide and titanium oxide, or silicon dioxide and niobium oxide.

With reference to the first aspect or the first, second, third, fourth, fifth, sixth, seventh, or eighth possible implementation manner of the first aspect, in a ninth possible implementation manner, the light reflection layer is disposed on the part of the outer surface of the light guide plate substrate except the light inlet surface and the light outlet surface by means of any process of electroplating, vacuum electroplating, sputtering, electrophoresis, and coating.

With reference to the first aspect or the first, second, third, fourth, fifth, sixth, seventh, eighth, or ninth possible implementation manner of the first aspect, in a tenth possible implementation manner, the first light source includes any one of an inorganic LED, an organic LED, electroluminescence, photoluminescence, quantum luminescence, and laser.

According to a second aspect, an embodiment of the present invention provides a liquid crystal display module, including a light guide plate, a first light source, a scattering sheet, a liquid crystal display, and a drive circuit, where
the light guide plate includes: a light guide plate substrate and a light reflection layer, where the light guide plate substrate includes a light inlet surface and a light outlet surface, a first groove is disposed on the light guide plate substrate, the first groove is configured to accommodate a light emitting portion of the first light source, a bottom surface of the first groove forms the light inlet surface, and the light reflection layer is disposed on a part of an outer surface of the light guide plate substrate except the light inlet surface and the light outlet surface;
light emitted from the first light source enters the light guide plate substrate through the light inlet surface, and is refracted by the light reflection layer, so that the light emitted from the first light source comes out through the light outlet surface; and
the scattering sheet is located on the light outlet surface of the light guide plate, the liquid crystal display is located on the scattering sheet, and the drive circuit is electrically connected to the liquid crystal display.

In a first possible implementation manner, the light inlet surface further includes a groove peripheral surface of the first groove.

With reference to the second aspect or the first possible implementation manner of the second aspect, in a second possible implementation manner, the first groove is further configured to form airtight space with the first light source, so as to prevent the light emitted from the first light source from coming out from another place except the light inlet surface.

With reference to the first or second possible implementation manner of the second aspect, in a third possible implementation manner, the bottom surface is planar or arc-shaped.

With reference to the second aspect or the first possible implementation manner of the second aspect, in a fourth possible implementation manner, the first groove is disposed on an end of an upper surface or an end of a lower surface of the light guide plate substrate; and an angle between the groove peripheral surface of the first groove and the upper surface or the lower surface is a right angle.

With reference to the second aspect or the first possible implementation manner of the second aspect, in a fifth possible implementation manner, the first groove is disposed on a joint of an upper surface and an end surface of the light guide plate substrate, or the first groove is disposed on a joint of a lower surface and an end surface of the light guide plate substrate; and an angle between the groove peripheral surface of the first groove and the upper surface or the lower surface of the light guide plate substrate is an acute angle.

With reference to the fourth or fifth possible implementation manner of the second aspect, in a sixth possible implementation manner, the joint of the upper surface or the lower surface of the light guide plate substrate and the end surface of the light guide plate substrate is a curved surface.

With reference to the second aspect or the first, second, third, fourth, fifth, or sixth possible implementation manner of the second aspect, in a seventh possible implementation manner, optical clear adhesive is filled between the light emitting portion of the first light source and the first groove.

With reference to the second aspect or the first, second, third, fourth, fifth, sixth, or seventh possible implementation manner of the second aspect, in an eighth possible implementation manner, the light reflection layer is any one of silver, aluminum, and non-metallic dielectric film, where
the non-metallic dielectric film is made of silicon dioxide and titanium oxide, or silicon dioxide and niobium oxide.

With reference to the second aspect or the first, second, third, fourth, fifth, sixth, seventh, or eighth possible implementation manner of the second aspect, in a ninth possible implementation manner, the light reflection layer is disposed on the part of the outer surface of the light guide plate substrate except the light inlet surface and the light outlet surface by means of any process of electroplating, vacuum electroplating, sputtering, electrophoresis, and coating.

With reference to the second aspect or the first, second, third, fourth, fifth, sixth, seventh, eighth, or ninth possible implementation manner of the second aspect, in a tenth possible implementation manner, the scattering sheet includes a scattering film and an antireflective film, where the scattering film is located on the light outlet surface of the light guide plate, and the antireflective film is located on the scattering film; or
the scattering sheet includes a scattering film, where the scattering film is located on the light outlet surface of the light guide plate.

According to a third aspect, an embodiment of the present invention provides a terminal device, including the liquid crystal display module described in the second aspect.

In a first possible implementation manner, the terminal device further includes a flexible printed circuit board, and the liquid crystal display module receives image data by using the flexible printed circuit board.

According to a light guide plate, a liquid crystal display module, and a terminal device in the embodiments of the present invention, a light reflection layer on a part of a light guide plate substrate except a light inlet surface and a light outlet surface increases reflection efficiency of a light guide plate, and a first groove on the light guide plate substrate accommodates a light emitting portion of a first light source, so that the first light source is partially embedded in the first groove, effectively improving the amount of incident light of the light guide plate. In this way, backlight efficiency of an LCM is improved without increasing a size of the LCM.

### BRIEF DESCRIPTION OF DRAWINGS

FIG. 1 is a schematic diagram of an LCM according to the prior art;
FIG. 2 is a schematic diagram of an LED-embedded light guide plate according to the prior art;
FIG. 3 is a schematic sectional view of a light guide plate according to an embodiment of the present invention;
FIG. 4 is a schematic sectional view of another light guide plate according to an embodiment of the present invention; and
FIG. 5 is a schematic structural diagram of an LCM according to an embodiment of the present invention.

### DESCRIPTION OF EMBODIMENTS

A light guide plate, a liquid crystal display module, and a terminal device provided in embodiments of the present invention are described below in detail.

FIG. 3 is a schematic diagram of a light guide plate according to an embodiment of the present invention.

As shown in FIG. 3, the light guide plate 1 provided in this embodiment of the present invention includes a light guide plate substrate 11 and a light reflection layer 12, where
the light guide plate substrate 11 includes a light inlet surface 112 and a light outlet surface 113, where a first groove 111 is disposed on the light guide plate substrate 11, the first groove 111 is configured to accommodate a light emitting portion of a first light source, and a bottom surface 1112 of the first groove 111 forms the light inlet surface 112; and
the light reflection layer 12 is disposed on a part of an outer surface of the light guide plate substrate 11 except the light inlet surface 112 and the light outlet surface 113, where
after light emitted from the first light source enters the light guide plate substrate 11 through the light inlet surface 112, and is refracted by the light reflection layer 12, the light emitted from the first light source comes out through the light outlet surface 113.

It can been seen from above that the first groove 111 accommodates the light emitting portion of the first light source, and the light reflection layer is disposed on the part of the outer surface of the light guide plate substrate except the light inlet surface 112 and the light outlet surface 113, so that after light emitted from the light emitting portion of the first light source enters the light guide plate substrate 11 through the light inlet surface 112, and is refracted by the light reflection layer 12, the light emitted from the first light source can be output through the light outlet surface 113, so as to prevent light in the light guide plate 1 from coming out from another place and affecting light guiding efficiency of the light guide plate 1.

The bottom surface 1112 of the first groove 111 may be planar or arc-shaped.

Optionally, the light inlet surface 112 may further include a groove peripheral surface 1111 of the first groove 111, and a cross section of the groove peripheral surface 1111 may be rectangular or circular, or in another shape.

It should be noted that, in this embodiment of the present invention, when the bottom surface 1112 of the first groove 111 is arc-shaped, in this case, the first groove 111 may not have the groove peripheral surface 1111; certainly, when the bottom surface 1112 of the first groove 111 is arc-shaped, the first groove 111 may also have the groove peripheral surface 1111.

The first groove 111 may form airtight space with the first light source, so as to prevent the light emitted from the first light source from coming out from another place except the light inlet surface 112.

The first light source may be an LED light source, or may be another light source. The first light source may include but is not limited to any one of an inorganic LED, an organic LED, electroluminescence, photoluminescence, quantum luminescence, and laser, or may be a light source generating light indirectly and passively or a light source generating light directly.

An LED light source is used as an example for a specific description below.

The first groove 111 is disposed on an end of an upper surface or an end of a lower surface of the light guide plate substrate 11; and an angle between the groove peripheral surface 1111 of the first groove 111 and the upper surface or the lower surface of the light guide plate substrate 11 may be an acute angle or a right angle (that is, an angle between a direction of a peripheral surface of the first groove 111 and the lower surface or the upper surface of the light guide plate substrate 11 may be an acute angle or a right angle). Alternatively, the first groove 111 is disposed on a joint of an upper surface and an end surface of the light guide plate substrate 11, or the first groove 111 is disposed on a joint of a lower surface and an end surface of the light guide plate substrate 11; and an angle between the groove peripheral surface 1111 of the first groove 111 and the upper surface or the lower surface of the light guide plate substrate 11 is an acute angle (that is, an angle between a direction of a peripheral surface of the first groove 111 and the upper surface or the lower surface of the light guide plate substrate 11 may be an acute angle or a right angle).

Specifically, FIG. 3 shows a case in which the angle between the groove peripheral surface 1111 of the first groove 111 and the lower surface of the light guide plate substrate 11 is a right angle.

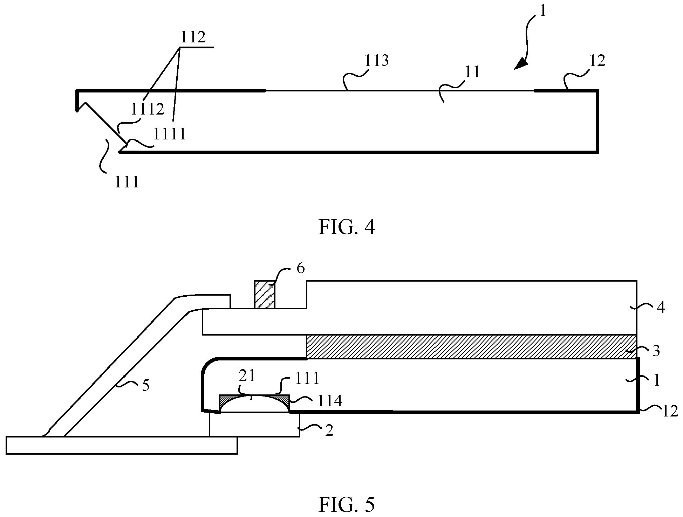

In some products, the light guide plate 1 is required to be relatively thin, and therefore a position of the first groove 111 may be changed, as shown in FIG. 4. The angle between the groove peripheral surface 1111 of the first groove 111 and the lower surface of the light guide plate substrate 11 is an acute angle (that is, the angle between the direction of the peripheral surface of the first groove 111 and the lower surface of the light guide plate substrate 11 may be an acute angle or a right angle), and the first groove 111 is disposed on the joint of the lower surface and the end surface of the light guide plate substrate 11.

A case in which the first groove 111 is disposed on the upper surface of the light guide plate substrate 11 is similar to that in FIG. 3, which is not shown individually.

As restraint between a size of the LED light source and a thickness of the light guide plate is considered, the angle between the groove peripheral surface 1111 of the first groove 111 and the upper surface or the lower surface of the light guide plate substrate 11 may be preferably between 80° and 90°.

As shown in FIG. 3, a joint of a surface (for example, the upper surface of the light guide plate substrate 11) opposite to a surface on which the first groove 111 is located (for example, the lower surface of the light guide plate substrate 11) on the light guide plate substrate 11 and an end surface of the light guide plate substrate 11 (that is, a side surface of the light guide plate substrate 11) is a curved surface, which can enhance reflection of the light emitted from the light emitting portion of the LED light source in the first groove 111, and improve light guiding efficiency of the light guide plate substrate 11.

The LED light source is partially embedded in the first groove 111, that is, after the light emitting portion of the LED light source is disposed in the first groove 111, a gap between the light emitting portion of the LED light source and the first groove 111 may be filled with optical clear adhesive (which is not shown in a figure), to decrease losses of light reflection and scattering caused by an air gap.

Therefore, the first groove 111 of the light guide plate substrate 11 accommodates the light emitting portion of the first light source, so that the first light source is partially embedded in the first groove 111, which effectively improves the amount of incident light of the light guide plate without increasing a thickness of the light guide plate.

The light reflection layer 12 may be made of a metal material having a good reflection effect, such as silver or aluminum, or may be a dielectric film made of other non-metallic materials having a good reflection effect. The non-metallic materials may be silicon dioxide and titanium oxide, or silicon dioxide and niobium oxide. The light reflection layer 12 may be disposed at all or some positions on the outer surface of the light guide plate substrate 11 except the light inlet surface 112 and the light outlet surface 113 by means of any process of electroplating, vacuum electroplating, sputtering, electrophoresis, and coating. This structure is applicable to light guide plates in different manners of light input by a light source, for example, the structure may be used for a light guide plate in an LED backlight manner in this embodiment of the present invention, and may also be used for another light guide plate in another light output manner; and the structure may be used for a light guide plate of an LED light source, and may also be used for another light guide plate of another light source.

The light reflection layer 12 is disposed on the outer surface of the light guide plate substrate 11 except the light inlet surface 112 and the light outlet surface 113. Compared with conventional usage of an adhesive material, for example, a manner of using a reflection paper, a white plastic frame, or a reflection sheet, usage of the light reflection layer 12 not only effectively reduces light losses and reflection decrease caused by an air gap, but also effectively reduces a thickness and length of the light guide plate substrate 11.

Correspondingly, an embodiment of the present invention provides a liquid crystal display module (LCM) to which the light guide plate provided in the foregoing embodiment is applied. As shown in FIG. 5, the LCM includes: a light guide plate 1, a first light source 2, a scattering sheet 3, a liquid crystal display (LCD) 4, and a drive circuit 6.

Referring to FIG. 3 again, the light guide plate 1 includes a light guide plate substrate 11 and a light reflection layer 12, where
the light guide plate substrate 11 includes a light inlet surface 112 and a light outlet surface 113, where the first groove 111 is configured to accommodate a light emitting portion 21 of a first light source, and a bottom surface 1112 of the first groove 111 forms the light inlet surface 112;
the light reflection layer 12 is disposed on a part of an outer surface of the light guide plate substrate 11 except the light inlet surface 112 and the light outlet surface 113;
after light emitted from the first light source 2 enters the light guide plate substrate 11 through the light inlet surface 112, and is refracted by the light reflection layer 12, the light emitted from the first light source 2 comes out through the light outlet surface 113;
the scattering sheet 3 is located on the light outlet surface 113 of the light guide plate 1, and the LCD 4 is located on the scattering sheet 3; and
the drive circuit 6 is electrically connected to the LCD 4.

It can been seen from above that, in the liquid crystal display module (LCM) in this embodiment, the first groove 111 accommodates the light emitting portion 21 of the first light source 2, and the light reflection layer 12 is disposed on the part of the outer surface of the light guide plate substrate 11 except the light inlet surface 112 and the light outlet surface 113, so that after light emitted from the light emitting portion 21 of the first light source 2 enters the light guide plate substrate 11 through the light inlet surface 112, and is refracted by the light reflection layer 12, the light emitted from the first light source 2 can be output through the light outlet surface 113, so as to prevent light in the light guide plate 1 from coming out from another place and affecting light guiding efficiency of the light guide plate 1.

The bottom surface 1112 of the first groove 111 may be planar or arc-shaped.

Optionally, the light inlet surface 112 may further include a groove peripheral surface 1111 of the first groove 111, and a cross section of the groove peripheral surface 1111 may be rectangular or circular, or in another shape.

The first groove 111 may form airtight space with the first light source, so as to prevent the light emitted from the first light source from coming out from another place except the light inlet surface 112.

The first groove 111 is disposed on an end of a lower surface or an upper surface of the light guide plate substrate 11; and an angle between the groove peripheral surface 1111 of the first groove 111 and the lower surface or the upper surface of the light guide plate substrate 11 may be an acute angle or a right angle. Alternatively, the first groove 111 is disposed on a joint of an upper surface and an end surface of the light guide plate substrate 11, or the first groove 111 is disposed on a joint of a lower surface and an end surface of the light guide plate substrate 11; and an angle between the groove peripheral surface 1111 of the first groove 111 and the upper surface or the lower surface of the light guide plate substrate 11 is an acute angle.

The first light source 2 may be an LED light source. The light emitting portion 21 of the first light source 2 is embedded in the first groove 111 of the light guide plate 1, and a gap between the light emitting portion 21 of the first light source 2 and the first groove 111 of the light guide plate 1 may be filled with optical clear adhesive 114. The rest part of the first light source 2 may be disposed outside the light guide plate 1. All of the light emitted from the light emitting portion 21 of the LED light source 2 almost enters the light guide plate 1, comes out through the light outlet surface (which is not shown in FIG. 5) of the light guide plate 1 after refracted by the light reflection layer 12 in the light guide plate 1, and enters the scattering sheet 3 disposed on the light outlet surface of the light guide plate 1. The scattering sheet 3 scatters the received light, and the light is finally output through the LCD 4 disposed on the scattering sheet 3.

The scattering sheet 3 may include a scattering film and an antireflective film, where the scattering film is located on the light outlet surface 113 of the light guide plate 1, and the antireflective film is located on the scattering film. The scattering sheet 3 may also include a scattering film, where the scattering film is located on the light outlet surface 113 of the light guide plate 1.

The drive circuit 6 may be a driver IC, and may be welded on the LCD 4 for electrical connection to the LCD 4.

The LCM may further include a flexible printed circuit board (Flexible Printed Circuit Board, FPC) 5, and the LCM may receive, by using the FPC 5, image data sent by a processor of a terminal device on which the LCM is located.

The LCD 4 may include multiple liquid crystal pixels, and each liquid crystal pixel includes three elements: R, G, and B. The LCM receives the image data by using the FPC 5, and sends the image data to the driver IC. The driver IC has a memory (for example, a random access memory), which can store the image data, and the driver IC outputs a corresponding voltage signal to each liquid crystal pixel on the LCD 4 according to the image data. Corresponding liquid crystal deflection is performed for the liquid crystal pixel of the LCD 4 according to the received voltage signal, where different voltage values determine different liquid crystal deflection angles, so that the liquid crystal pixels are displayed with different luminance degrees and colors by using different liquid crystal deflection angles. In this way, the LCM can display the received image data.

In a specific example, an angle between the groove peripheral surface of the first groove 111 and a bottom surface of the light guide plate 1 may be an acute angle. The bottom surface of the light guide plate 1 is a lower surface of the light guide plate 1.

In another specific example, an angle between the groove peripheral surface of the first groove 111 and a bottom surface of the light guide plate 1 may be a right angle. The bottom surface of the light guide plate 1 is a lower surface of the light guide plate 1.

In still another specific example, a thickness of an end of the light guide plate 1 on which the first groove 111 is located is equal to a thickness of the rest part of the light guide plate 1.

In yet another specific example, a thickness of an end of the light guide plate 1 on which the first groove 111 is located is greater than a thickness of the rest part of the light guide plate 1.

In this embodiment, a solution in which the gap between the light emitting portion 21 of the LED light source 2 and the first groove 111 of the light guide plate 1 is filled with the optical clear adhesive 114 is provided, to implement exclusion of an air gap between the light guide plate 1 and the LED light source 2. In addition, the light guide plate 1 and the LED light source 2 may be integrally formed by injection molding or another manner may be used to implement exclusion of an air gap between the light guide plate 1 and the LED light source 2.

According to the liquid crystal display module in this embodiment of the present invention, the light reflection layer 12 on the light guide plate 1 increases reflection efficiency of the light guide plate 1, and the first groove 111 on the light guide plate accommodates the light emitting portion 21 of the first light source 2, so that the light emitting portion 21 of the first light source 2 is embedded in the first groove 111, effectively improving the amount of incident light of the light guide plate 1. In this way, backlight efficiency of the LCM is improved without increasing a size of the LCM.

Correspondingly, an embodiment of the present invention further provides a terminal device, including the liquid crystal display module provided in the foregoing embodiment.

The terminal device may be a terminal having a liquid crystal display module, for example, the terminal device may be a cell phone, a wearable device, a navigator, a computer, or a PAD.

In the foregoing specific implementation manners, the objective, technical solutions, and benefits of the present invention are further described in detail. It should be understood that the foregoing descriptions are merely specific implementation manners of the present invention, but are not intended to limit the protection scope of the present invention. Any modification, equivalent replacement, or improvement made without departing from the spirit and principle of the present invention should fall within the protection scope of the present invention.

## Claims

1. A light guide plate, comprising:
a light guide plate substrate, comprising a light inlet surface and a light outlet surface, wherein a first groove is disposed on the light guide plate substrate, the first groove is configured to accommodate a light emitting portion of a first light source, and a bottom surface of the first groove forms the light inlet surface; and
a light reflection layer, disposed on a part of an outer surface of the light guide plate substrate except the light inlet surface and the light outlet surface, wherein
light emitted from the first light source enters the light guide plate substrate through the light inlet surface, and is refracted by the light reflection layer, so that the light emitted from the first light source comes out through the light outlet surface.

2. The light guide plate according to claim 1, wherein the light inlet surface further comprises a groove peripheral surface of the first groove.

3. The light guide plate according to claim 1 or 2, wherein the first groove is further configured to form airtight space with the first light source, so as to prevent the light emitted from the first light source from coming out from another place except the light inlet surface.

4. The light guide plate according to claim 1, wherein the bottom surface is planar or arc-shaped.

5. The light guide plate according to claim 2, wherein the first groove is disposed on an end of an upper surface or an end of a lower surface of the light guide plate substrate; and an angle between the groove peripheral surface of the first groove and the upper surface or the lower surface is a right angle.

6. The light guide plate according to claim 2, wherein the first groove is disposed on a joint of an upper surface and an end surface of the light guide plate substrate, or the first groove is disposed on a joint of a lower surface and an end surface of the light guide plate substrate; and an angle between the groove peripheral surface of the first groove and the upper surface or the lower surface of the light guide plate substrate is an acute angle.

7. The light guide plate according to claim 5 or 6, wherein the joint of the upper surface or the lower surface of the light guide plate substrate and the end surface of the light guide plate substrate is a curved surface.

8. The light guide plate according to any one of claims 1 to 7, wherein optical clear adhesive is filled between the light emitting portion of the first light source and the first groove.

9. The light guide plate according to any one of claims 1 to 8, wherein the light reflection layer is any one of silver, aluminum, and non-metallic dielectric film, wherein
the non-metallic dielectric film is made of silicon dioxide and titanium oxide, or silicon dioxide and niobium oxide.

10. The light guide plate according to any one of claims 1 to 9, wherein the light reflection layer is disposed on the part of the outer surface of the light guide plate substrate except the light inlet surface and the light outlet surface by means of any process of electroplating, vacuum electroplating, sputtering, electrophoresis, and coating.

11. The light guide plate according to any one of claims 1 to 10, wherein the first light source comprises any one of an inorganic LED, an organic LED, electroluminescence, photoluminescence, quantum luminescence, and laser.

12. A liquid crystal display module, wherein the liquid crystal display module comprises a light guide plate, a first light source, a scattering sheet, a liquid crystal display, and a drive circuit, wherein
the light guide plate comprises a light guide plate substrate and a light reflection layer, wherein the light guide plate substrate comprises a light inlet surface and a light outlet surface, a first groove is disposed on the light guide plate substrate, the first groove is configured to accommodate a light emitting portion of the first light source, a bottom surface of the first groove forms the light inlet surface, and the light reflection layer is disposed on a part of an outer surface of the light guide plate substrate except the light inlet surface and the light outlet surface;
light emitted from the first light source enters the light guide plate substrate through the light inlet surface, and is refracted by the light reflection layer, so that the light emitted from the first light source comes out through the light outlet surface; and
the scattering sheet is located on the light outlet surface of the light guide plate, the liquid crystal display is located on the scattering sheet, and the drive circuit is electrically connected to the liquid crystal display.

13. The liquid crystal display module according to claim 12, wherein the light inlet surface further comprises a groove peripheral surface of the first groove.

14. The liquid crystal display module according to claim 12 or 13, wherein the first groove is further configured to form airtight space with the first light source, so as to prevent the light emitted from the first light source from coming out from another place except the light inlet surface.

15. The liquid crystal display module according to claim 12, wherein the bottom surface is planar or arc-shaped.

16. The liquid crystal display module according to claim 13, wherein the first groove is disposed on an end of an upper surface or an end of a lower surface of the light guide plate substrate; and an angle between the groove peripheral surface of the first groove and the upper surface or the lower surface is a right angle.

17. The liquid crystal display module according to claim 13, wherein the first groove is disposed on a joint of an upper surface and an end surface of the light guide plate substrate, or the first groove is disposed on a joint of a lower surface and an end surface of the light guide plate substrate; and an angle between the groove peripheral surface of the first groove and the upper surface or the lower surface of the light guide plate substrate is an acute angle.

18. The liquid crystal display module according to claim 16 or 17, wherein the joint of the upper surface or the lower surface of the light guide plate substrate and the end surface of the light guide plate substrate is a curved surface.

19. The liquid crystal display module according to any one of claims 12 to 18, wherein optical clear adhesive is filled between the light emitting portion of the first light source and the first groove.

20. The liquid crystal display module according to any one of claims 12 to 19, wherein the light reflection layer is any one of silver, aluminum, and non-metallic dielectric film, wherein
the non-metallic dielectric film is made of silicon dioxide and titanium oxide, or silicon dioxide and niobium oxide.

21. The liquid crystal display module according to any one of claims 12 to 20, wherein the scattering sheet comprises a scattering film and an antireflective film, wherein the scattering film is located on the light outlet surface of the light guide plate, and the antireflective film is located on the scattering film; or
the scattering sheet comprises a scattering film, wherein the scattering film is located on the light outlet surface of the light guide plate.

22. A terminal device, wherein the terminal device comprises the liquid crystal display module according to any one of claims 12 to 21.

23. The terminal device according to claim 22, wherein the terminal device further comprises a flexible printed circuit board, and the liquid crystal display module receives image data by using the flexible printed circuit board.
